**Europäisches Patentamt**

**European Patent Office**

**Office européen des brevets**

(11) Veröffentlichungsnummer: **0 124 473**
A1

## (12) EUROPÄISCHE PATENTANMELDUNG

(21) Anmeldenummer: **84810004.6**

(22) Anmeldetag: **05.01.84**

(51) Int. Cl.³: **A 47 J 31/32, B 65 D 83/14**

(30) Priorität: **06.01.83 CH 72/83**

(43) Veröffentlichungstag der Anmeldung: **07.11.84**
**Patentblatt 84/45**

(84) Benannte Vertragsstaaten: **DE FR IT NL**

(71) Anmelder: **Isor AG, Unterführungsstrasse 42,**
**CH-4600 Olten (CH)**

(72) Erfinder: **Augsburger, Fritz, Simon-Gfellerstrasse 14,**
**CH-3432 Lützelflüh (CH)**

(74) Vertreter: **Haffter, Tobias Fred, Dr. Dipl.-Phys. et al,**
**PATENTANWALTS-BUREAU ISLER AG**
**Postfach 6940 Walchestrasse 23, CH-8023 Zürich (CH)**

(54) **Automatische Espressokaffeemaschine.**

(57) Die automatische Espressokaffeemaschine hat ein Druckminderventil (3), in welches wiederholt eine Pressluftpatrone (4) einsetzbar ist. Bei eingesetzter Patrone (4) gelangt Pressluft über ein Rückschlagventil (6) und einen Durchgang (7a, 8) in einen Druckraum (10), der über eine Leitung (10a) mit einem druckfesten Frischwassergefäss (1) verbunden ist. An das Frischwassergefäss ist über ein Absperrventil (11) ein thermostatisch geregelter Durchlauferhitzer (12) angeschlossen, der eine das Kaffeepulver enthaltende Filterpfanne (14) mit erhitztem Druckwasser speist. Zur Begrenzung des Pressluftdruckes auf einen bestimmten Wert, beispielsweise 5 bar, ist im Druckraum (10) ein Druckteller (7c) angeordnet, der bei Überdruck auf ein im Pressluft-Durchgang (7a, 8) angeordnetes Ventil (7b) zu dessen Schliessung wirkt.

Bei dieser Espressokaffeemaschine für Haushalt und Büro ist eine verschleissanfällige Pumpe zur Erzeugung von Druckwasser vermieden.

Fig. 1

Fig. 3

## Automatische Espressokaffeemaschine

Die Erfindung bezieht sich auf eine automatische Espressokaffeemaschine, bei welcher erhitztes Druckwasser in eine zur Aufnahme von Kaffeepulver bestimmte, mit einer Abflussöffnung versehene Filterpfanne strömt.

Solche Espressokaffeemaschinen sind in kompakter Bauform bekannt, um Espressokaffee im Haushalt oder in Bürobetrieben zuzubereiten. Die bekannten Espressokaffeemaschinen dieser Art benötigen zur Erzeugung des durch das Kaffeepulver gepressten Druckwassers, soweit sie nicht als nicht-automatische Maschinen mit einer von Hand zu betätigenden Kolbeneinrichtung versehen sind, eine Pumpe, die den bekannten Nachteil eines raschen Verschleisses hat.

Zur Vermeidung dieses Nachteils weist die erfindungsgemässe automatische Espressokaffeemaschine die im Patentanspruch 1 angeführten Merkmale auf.

00124473

Durch die Verwendung eines wiederholt einsetzbaren Pressluftbehälters zur Erzeugung von erhitztem Druckwasser, der vorzugsweise als handelsübliche Pressluftpatrone ausgebildet ist, entfällt ein bewegliche mechanische Teile aufweisendes Pumpenaggregat, so dass durch die Erfindung ein kompakter Aufbau und ein störungsfreier Betrieb der Kaffeemaschine erzielt werden.

Ein Ausführungsbeispiel des Erfindungsgegenstandes wird nachstehend anhand der Zeichnungen erläutert. Es zeigen :

Fig. 1 einen Schnitt durch das Druckminderventil der Espressokaffeemaschine mit eingesetzter Pressluftpatrone,

Fig. 2 einen Schnitt durch das Frischwassergefäss, und

Fig. 3 einen Schnitt durch den Durchlauferhitzer mit angesetzter Filterpfanne und darunter gestellter Kaffeetasse.

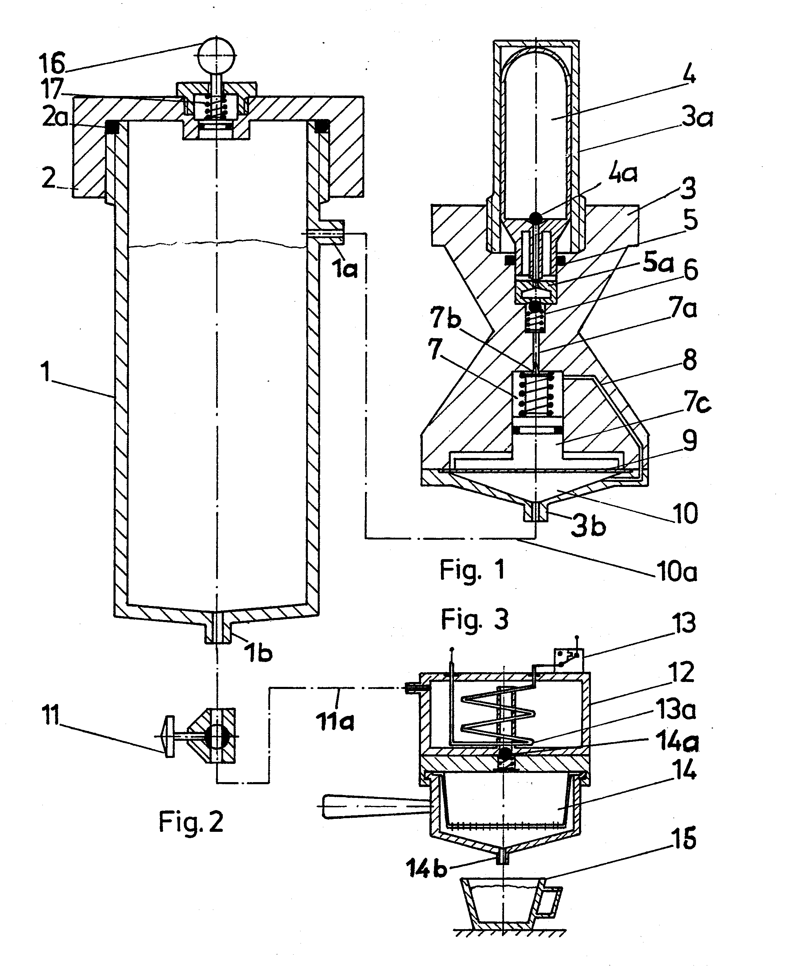

Hierbei sind durch strichpunktierte Linien die Druckluft- bzw. Druckwasser- und Kaffeewasserverbindungen der in den Fig. 1 bis 3 dargestellten Bauelemente angedeutet.

- 3 -

In Fig. 2 ist ein druckfestes, zylindrisches Frischwassergefäss 1 dargestellt, das mit einem Druckluftanschluss 1a und einem Druckwasserauslass 1b versehen ist. Das Frischwassergefäss 1 ist mit einem aufschraubbaren Deckel 2 und einem eingelegten Dichtring 2a, z.B. einem O-Ring, druckfest verschliessbar.

An den Druckluftanschluss 1a des Frischwassergefässes ist ein in Fig. 1 dargestelltes Druckminderventil 3 angeschlossen. In den in Fig. 1 oberen Teil des Körpers des Druckminderventils 3 ist eine Hülse 3a einschraubbar, welche derart ausgebildet ist, dass sie eine an sich handelsübliche Pressluftpatrone 4 aufnehmen kann. Solche Pressluftpatronen weisen beispielsweise einen Inhalt von 10 cm$^3$ und einen Pressluftdruck von 56 bar auf. Zudem haben die bekannten Pressluftpatronen ein Stiftventil 4a, das durch einen Druck auf einen vorstehenden Teil des Stiftes geöffnet werden kann. Beim Einsetzen der Pressluftpatrone 4 in das Druckminderventil 3 und entsprechendem Einschrauben der Hülse 3a wird der das Stiftventil 4a enthaltende Hals der Pressluftpatrone 4 durch einen eingelegten Dichtungsring 5, z.B. einen O-Ring, abgedichtet.

In axialer Richtung unterhalb des vorstehenden Stiftteils des Stiftventils 4a der Pressluftpatrone 4 ist ein elastischer Auflagekörper 5a angeordnet, der einen axialen Durchgang hat. Unterhalb dem Auflagekörper 5a ist ein Rückschlagventil 6 angeordnet, das mit einer Kammer 7 über einen Kanal 7a in Verbindung steht. Der Kanal 7a ist durch ein federbelastetes Ventil 7b mittels eines Drucktellers 7c verschliessbar, wobei die Feder des Ventils 7b dieses ohne Einwirkung des Drucktellers 7c offen hält. Eine Passleitung 8 verbindet die Kammer 7 mit einem unterhalb des Drucktellers 7c befindlichen, mit einem Ausgangsanschluss 3b versehenen Druckraum, wobei der Druckteller 7c auf einer Membran 9 aufliegt. Durch eine Leitung 10a ist der Ausgangsanschluss 3b bzw. der Druckraum 10 mit dem Druckluftanschluss 1a des Frischwassergefässes 1 verbunden.

An den Druckwasserauslass 1b des Frischwassergefässes 1 ist eine Leitung 11a angeschlossen, in welcher ein Absperrventil 11 angeordnet ist, und welche zudem an einen Durchlauferhitzer 12 angeschlossen ist. Ein Thermostat 13 steuert die Heizleistung eines Heizelementes 13a, welches das in der Kammer des Durchlauferhitzers 12 befindliche Wasser auf eine Temperatur von etwa 90°C erwärmt.

- 5 -

Unterhalb des Durchlauferhitzers 12 ist eine an sich bekannte wegnehmbare Filterpfanne 14 angeordnet, in welche das Kaffeepulver eingegeben wird, und welche über ein Rückschlagventil 14a, das ein Nachtropfen verhindert, mit dem Durchlauferhitzer 12 in Verbindung steht. Die Filterpfanne 14 hat zudem eine Auslassöffnung 14b, aus welcher der zubereitete Kaffee in eine darunter gestellte Kaffeetasse 15 fliessen kann.

Der Deckel 2 des Frischwassergefässes 1 ist mit einem einen Handgriff 16, z.B. einen Ring, aufweisenden Ueberdruckventil 17 versehen.

Zum Betrieb der die Bauelemente gemäss Fig. 1 bis 3 enthaltenden automatischen Espressokaffeemaschine wird die Pressluftpatrone 4 bei geschlossenem Absperrventil 11 mittels der Hülse 3a in das Druckminderventil 3 eingesetzt. Das Frischwassergefäss 1 wird bis oben mit Wasser gefüllt. Die Filterpfanne 14 wird mit Kaffeepulver in der für eine Kaffeetasse benötigten Menge gefüllt.

Beim Einsetzen der Pressluftpatrone 4 in das Druckminderventil 3 mittels Einschrauben der Hülse 3a öffnet der Auflagekörper 5a das Stiftventil 4a der Pressluftpatrone 4, so dass Pressluft über das Rückschlagventil 6, den Kanal 7a und das Ventil 7b in die
Kammer 7 gelangt, von wo die Druckluft über die Pressleitung 8 in den Druckraum 10 und damit über den Ausgangsanschluss 3b, die Leitung 10a und den Druckluftanschluss 1a in das abgeschlossene Frischwassergefäss 1
strömt.

Hat sich im Frischwassergefäss ein bestimmter
Druck von beispielsweise 5 bar aufgebaut, wird die durch
Membran 9 der Druckteller 7c gegen die Feder des Ventils
7b gedrückt, so dass der in der Kammer 7 mündende Durchgang 7a verschlossen wird und damit die Pressluftzufuhr in das Frischwassergefäss 1 abgestellt wird. Sollte
aus irgend einem Grund der Druckteller 7c den Durchgang
7a über das Ventil 7b nicht schliessen, entsteht im
Frischwassergefäss 1 ein Ueberdruck, welcher durch ein
Ansprechen des im Deckel 2 befindlichen Ueberdruckventils
17 abgeleitet wird.

Zur Zubereitung des Espressokaffees wird das
Absperrventil zeitweise geöffnet, so dass Wasser mit
einem Druck von beispielsweise 5 bar in den Durchlauferhitzer 12 strömt. Durch das Heizelement 13a wird das Druckwasser im Durchlauf auf etwa 90°C erhitzt und durch die Filterpfanne 14, in der sich das Kaffeepulver befindet, gepresst, so dass das Kaffeewasser in die darunter stehende Tasse 15 fliesst. Der Strom des Druckwassers aus dem Frischwassergefäss 1 wird durch Schliessen des Absperrventils 11 unterbrochen. Weitere Portionen von Kaffee können durch Einfüllen neuen Kaffeepulvers in die Filterpfanne 14 und Betätigung des Absperrventils 11 zubereitet werden.

Zum Nachfüllen des Frischwassergefässes 1 kann dessen Deckel 2 erst dann geöffnet werden, wenn die sich im Frischwassergefäss 1 befindliche, unter einem Ueberdruck stehende Pressluft abgelassen worden ist. Zur Entlüftung des Frischwasserbehälters 1 wird das Ueberdruckventil 17 durch Ziehen des Ringes 16 betätigt.

Mit einer Pressluftpatrone 4 können in der vorliegenden Espressokaffeemaschine in beliebigen zeitlichen Abständen mehrere Kaffeeportionen zubereitet werden, beispielsweise 8 bis 12 mit einer handelsüblichen Patrone von 10 cm$^3$ bzw. 56 bar bei gleichbleibendem Druck.

00124473

Statt einer Schraubbefestigung des Deckels 2 und der Hülse 3a kann natürlich auch eine andere Befestigungsart vorgesehen sein, z.B. eine Renkbefestigung.

Die dargestellten Bauelemente Frischwassergefäss 1, Druckminderventil 3 und Durchlauferhitzer 12 können in der Espressokaffeemaschine an sich in beliebiger räumlicher Anordnung und Verbindung untergebracht sein, vorausgesetzt, dass eine leichte Zugänglichkeit zum Deckel 2 des Frischwassergefässes 1, zur Hülse 3a für die Pressluftpatrone 4, zum Absperrventil 11 und zum Boden des Durchlauferhitzers 12, an welchem die Filterpfanne 14 befestigbar ist, gewährleistet ist.

Patentansprüche
----------------------------

1. Automatische Espressokaffeemaschine, bei welcher erhitztes Druckwasser in eine zur Aufnahme von Kaffeepulver bestimmte mit einer Abflussöffnung versehene Filterpfanne strömt, dadurch gekennzeichnet, dass ein zum wiederholbaren Einsetzen eines Pressluftbehälters (4) ausgebildetes Druckminderventil (3) ausgangsseitig an ein druckfestes Frischwassergefäss (1) angeschlossen ist, dessen Auslass mit einem die Filterpfanne (14) speisenden Durchlauferhitzer (12) verbunden ist.

2. Kaffeemaschine nach Anspruch 1, dadurch gekennzeichnet, dass das Druckminderventil (3) zur Aufnahme einer mit einem Ventil (4a) versehenen Pressluftpatrone (4) ausgebildet ist, deren Pressluftinhalt, beispielsweise ein Volumen von 10 cm$^3$ und ein Druck von 56 bar, zur Zubereitung mehrerer Kaffeeportionen mit einem bestimmten, angenähert gleichbleibenden Wasserdruck, beispielsweise 5 bar, ausgebildet ist.

3. Kaffeemaschine nach Anspruch 1 oder 2, dadurch gekennzeichnet, dass zur Aufnahme des Pressluftbehälters (4) eine im Körper des Druckminderventils (3) lösbar befestigbare Hülse (3a) vorhanden ist.

4. Kaffeemaschine nach einem der Ansprüche 1 bis 3, dadurch gekennzeichnet, dass das Druckminderventil (3) einen an das Frischwassergefäss (1) angeschlossenen Druckraum (10) hat, welcher über eine Leitung (8, 7a) und ein in der Leitung (8, 7a) angeordnetes Ventil (7b) mit dem Auslass des in das Druckminderventil (3) eingesetzten Pressluftbehälters (4) in Verbindung steht, wobei im Druckraum (10) ein dem im Druckraum (10) herrschenden Druck ausgesetzter Druckteller (7c) angeordnet ist, der auf das genannte Ventil (7b) zu dessen Schliessung einwirkt, wenn der Druck im Druckraum (10) einen bestimmten Wert, beispielsweise 5 bar, erreicht.

5. Kaffeemaschine nach einem der Ansprüche 1 bis 4, dadurch gekennzeichnet, dass das Frischwassergefäss (1) durch einen lösbaren Deckel (2) druckfest geschlossen ist, der mit einem als Ueberdruck- und Entlüftungsventil ausgebildeten Sicherheitsventil (17) versehen ist.

6. Kaffeemaschine nach einem der Ansprüche
1 bis 5, dadurch gekennzeichnet, dass in einer an den
Auslass (1b) des Frischwassergefässes (1) und den
Durchlauferhitzer (12) angeschlossenen Leitung (11a)
ein Absperrventil (11) zur Steuerung des dem Durchlauferhitzer (12) zuzuführenden Druckwassers angeordnet
ist.

00124473

1 / 1

16
17
2a
2
1

Fig. 2

11
11a
1b

4
3a
4a
3
5
5a 6
7a
7b
7
8
7c
9
10
3b
10a

Fig. 1

Fig. 3

13
12
13a
14a
14
14b
15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 786 401 (LANGE)<br><br>* Insgesamt *<br><br>--- | 1-3,5,6 | A 47 J 31/32<br>B 65 D 83/14 |
| Y | US-A-3 113 503 (VULLIET-DURAND)<br>* Insgesamt *<br><br>--- | 1,6 | |
| Y | FR-E- 94 925 (CALMETTES)<br>* Insgesamt *<br><br>--- | 1 | |
| Y | US-A-3 423 209 (WEBER)<br>* Insgesamt *<br><br>--- | 1 | |
| Y | FR-A-2 006 896 (EURACOM)<br>* Insgesamt *<br><br>--- | 1-6 | |
| A | WO-A-8 000 315 (BRAITH WAITE et al.)<br>* Ingesamt *<br><br>--- | 1-6 | **RECHERCHIERTE SACHGEBIETE (Int. Cl. ³)**<br><br>A 47 J<br>B 65 D |
| A | US-A-3 352 457 (TRACY et al.)<br>* Insgesamt *<br><br>--- | 1-6 | |
| A | CH-A- 407 896 (NOVAG AG)<br>* Seite 2, Zeilen 16-33; Figuren 1,2 *<br><br>----- | 1-3,6 | |

Der vorliegende Recherchenbericht wurde für alle Patentansprüche erstellt.

| Recherchenort | Abschlußdatum der Recherche | Prüfer |
|---|---|---|
| DEN HAAG | 12-04-1984 | SCHARTZ J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82